# FASCICULE DE BREVET EUROPEEN

(11) **EP 4 337 536 B1**
(45) Date de publication et mention de la délivrance du brevet: **27.08.2025**
(21) Numéro de dépôt: 22724831.7
(22) Date de dépôt: 11.05.2022
(51) Int. Cl.: B64G 1/10, B64G 1/40, B64G 1/42, B64G 1/62, B64G 1/64, B64G 1/16

(54) **ENGIN SPATIAL DE DISTRIBUTION ÉLECTRIQUE, ET PROCÉDÉ ASSOCIÉ**
RAUMFAHRZEUG ZUR STROMVERTEILUNG UND ZUGEHÖRIGES VERFAHREN
SPACECRAFT FOR ELECTRICITY DISTRIBUTION, AND ASSOCIATED METHOD

(30) Priorité: 12.05.2021 FR 2105056
(43) Date de publication de la demande: 20.03.2024
(73) Titulaire: Centre National d'Études Spatiales, 75039 Paris Cedex 01 (FR); Safran Spacecraft Propulsion, 27200 Vernon (FR); THALES, 92190 Meudon (FR)
(72) Inventeur: BULTEL, Pascal, 77340 Pontault-Combault (FR); DURAND, Gautier, 06550 La Roquette sur Siagne (FR); THIRY, Nicolas, 06150 Cannes la Bocca (FR); ANSART, Marie, 31120 Roquettes (FR); BOUHOURS, Gilles, 06550 La Roquette sur Siagne (FR); DUCHEMIN, Olivier, 78114 Magny les Hameaux (FR); MARCHANDISE, Frédéric, 27200 Vernon (FR)
(74) Mandataire: Germain Maureau
(86) Numéro de dépôt international: PCT/FR2022/050901
(87) Numéro de publication internationale: WO 2022/238660

(56) Documents cités:
- DE-A1- 102015 014 869
- US-A1- 2012 000 575
- US-A1- 2015 021 439
- US-A1- 2019 248 515
- US-B1- 9 914 550

## Description

La présente description concerne la distribution d'énergie électrique par un engin spatial. Elle concerne également un procédé de distribution d'énergie électrique mettant en oeuvre un tel engin spatial.

### ETAT DE LA TECHNIQUE

Aujourd'hui, des missions spatiales sont prévues pour fournir en énergie électrique un engin client en un point dans l'espace libre, en orbite ou sur un corps céleste.

En fonction des besoins de la mission et de la position de l'engin client à alimenter en électricité, il est nécessaire de mettre en oeuvre plusieurs systèmes distincts afin d'amener un générateur solaire d'énergie électrique jusqu'à une position d'un engin client et le fournir en énergie électrique. Dans les cas de missions les plus complexes, il est nécessaire de prévoir un système de lancement destiné à amener le générateur solaire d'énergie électrique dans l'espace, un système de transfert et/ou de circularisation d'orbite dans l'espace pour assurer le transit dans l'espace du générateur solaire d'énergie électrique et un système de descente assurant la descente du générateur solaire d'énergie électrique sur un corps céleste.

Par exemple, dans le cas d'une mission dédiée à la distribution d'énergie électrique à un engin client situé dans l'espace libre ou en orbite, le générateur solaire d'énergie électrique est chargé sur un engin spatial équipé d'un système de transfert et/ou de circularisation d'orbite. L'engin spatial préalablement mis en orbite terrestre amène le générateur solaire d'énergie électrique jusqu'à l'engin client. Le générateur solaire d'énergie électrique peut alors être séparé du système de transfert et/ou de circularisation d'orbite pour être relié à l'engin client afin de distribuer de l'énergie électrique jusqu'à atteindre sa durée de mission, sans pouvoir être exploité aux fins de nouvelles missions.

Dans un autre exemple de mission, le générateur solaire d'énergie électrique, également préalablement mis en orbite terrestre, peut être destiné à distribuer de l'énergie électrique à un engin client situé sur un corps céleste. Pour cela, le générateur solaire d'énergie électrique peut être embarqué en tant que charge utile sur un système de descente permettant l'atterrissage du générateur solaire d'énergie électrique sur le corps céleste. Une fois au sol, le générateur solaire d'énergie électrique peut être débarqué du système d'atterrissage pour être relié à l'engin client et distribuer de l'énergie électrique jusqu'à atteindre sa durée de mission, également sans pouvoir être exploité aux fins de nouvelles missions.

Dans tous les cas de missions ponctuelles, les générateurs solaires d'énergie électrique aujourd'hui utilisés sont destinés à accomplir des missions de distribution d'énergie électrique à destination d'un engin client situé en un point dans l'espace libre, en orbite et/ou sur un corps céleste et ne permettent pas d'être exploité aux fins d'autres missions de distribution d'énergie électrique. Il en résulte que dans les missions existantes, la zone opérationnelle couverte pour la distribution d'énergie électrique est limitée.

Par ailleurs, l'utilisation de plusieurs systèmes distincts, entres autres, un système de lancement, un système de transfert et/ou de circularisation d'orbite dans l'espace et un système de descente nécessite l'utilisation d'équipements à masse élevée rendant coûteux de tels missions de distribution d'énergie électrique.

D'autre part, les contenants de carburant prévus pour ces missions ou des charges utiles à amener à un même engin client à alimenter en énergie électrique ou sur site peuvent être mis en orbite terrestre par des lanceurs distinctement du lanceur prévu pour la mise en orbite terrestre du générateur solaire d'énergie électrique. Le besoin en lanceurs s'en trouve augmenté.

En outre, les générateurs solaires d'énergie électrique présentent l'inconvénient de fournir une faible quantité d'énergie électrique (quelques kW) à l'engin client qu'ils doivent alimenter.

### RESUME

Il est souhaitable de résoudre au moins l'un des inconvénients précités en fournissant un engin spatial pouvant assurer plusieurs missions de distribution d'énergie électrique au cours de sa durée de vie.

Il peut également être souhaitable d'assurer des missions de distribution d'énergie électrique à grande puissance.

Il peut également être souhaitable de réduire le coût de missions de distribution d'énergie électrique.

Il peut également être souhaitable de réduire le besoin en lanceurs en orbite terrestre pour de telles missions.

Il peut également être souhaitable de fournir en engin spatial de distribution d'énergie électrique permettant l'emport de charge utile.

A cet effet, un mode de réalisation propose un engin spatial pour distribuer de l'énergie électrique à des engins clients, l'engin spatial comprenant : une structure principale équipée d'un propulseur électrique, d'un propulseur chimique et d'un générateur solaire d'énergie électrique, à géométrie variable, au moins un premier contenant de carburant destiné au propulseur électrique, et au moins un deuxième contenant de carburant destiné au propulseur chimique, et dans lequel : l'engin spatial est modulable pour coupler de manière amovible la structure principale au premier contenant pour fournir du carburant au propulseur électrique, ou au deuxième contenant pour fournir du carburant au propulseur chimique, et pour coupler de manière amovible le premier contenant et le deuxième contenant l'un à l'autre, le générateur solaire d'énergie électrique est configuré pour être : déployé pour distribuer de l'énergie électrique à un premier engin client situé en un premier point dans l'espace libre, en orbite ou sur un premier corps céleste, et pour déplacer l'engin spatial vers un second engin client situé en un second point dans l'espace libre, en orbite ou sur un second corps céleste, et rétracté pour réaliser des phases d'amarrage avec le premier ou second engin client dans l'espace libre ou en orbite, ainsi que des phases d'atterrissage vers un troisième corps céleste et de décollage depuis le troisième corps céleste pour un retour en orbite. Par « propulseur électrique » on entend un ensemble propulsif électrique comprenant un ou plusieurs moteur(s).

Par « propulseur chimique » on entend un ensemble propulsif chimique comprenant un ou plusieurs moteur(s).

Par « rétracté pour permettre le déplacement de l'engin spatial vers un autre engin client » on entend que le déplacement inclut entre autre des phases d'accostage sur l'autre engin client, des phases de descente.

Un tel engin spatial présente l'avantage de combiner plusieurs fonctions en un même engin spatial, en l'occurrence : le lancement depuis un corps céleste de l'engin spatial dans l'espace à l'aide du propulseur chimique, le transfert et/ou la circularisation de l'engin dans l'espace, ainsi que la distribution d'énergie électrique à destination de l'engin client vers lequel il est amené, et la distribution d'énergie électrique à l'engin client à l'aide du générateur solaire d'énergie électrique.

Par « coupler de manière amovible », on entend par exemple un premier élément détaché mécaniquement d'un deuxième élément pour être attaché mécaniquement à un troisième élément. L'état intermédiaire entre le détachement et l'attachement du premier élément correspond à un état transitoire dans lequel le premier élément est désolidarisé mécaniquement du deuxième élément et du troisième élément.

La combinaison de ces fonctions permet la distribution d'énergie électrique en tout point à des engins clients situés en différents points dans l'espace libre, en orbite et/ou sur un corps céleste.

Ainsi, un tel engin spatial peut être prévu pour réaliser successivement plusieurs missions de distribution d'énergie électrique à des engins clients situés dans l'espace libre, en orbite ou sur un corps céleste et ce de manière autonome.

A titre d'exemple, un tel engin spatial peut réaliser une première mission de distribution d'énergie électrique dans l'espace libre ou en orbite à un premier engin client avant de réaliser une deuxième mission de distribution d'énergie électrique sur un corps céleste à un deuxième engin client. L'invention n'est bien entendu pas limitée à cet exemple de mission et pourra être utilisée dans toute combinaison de missions exploitables par l'invention, par exemple, une première mission de distribution d'énergie électrique à un engin client situé sur un corps céleste tel que la Lune, suivie d'une deuxième mission de distribution d'énergie électrique à un autre engin client situé sur un autre corps céleste.

La structure principale comprenant le propulseur électrique, le propulseur chimique et le générateur solaire d'énergie électrique à géométrie variable forment un ensemble fonctionnel intégré.

Il pourra toutefois être prévu que le propulseur électrique puisse être découplé de la structure principale pour être remplacé.

Les engins clients peuvent être par exemple des infrastructures habitées, des infrastructures de production, des infrastructures de recherche (microgravité), des centres de calcul, des moyens d'assemblage lourds.

On comprendra que le propulseur chimique permet l'atterrissage et la mise en orbite de la structure principale sur ou depuis un corps céleste autre que la Terre.

On comprendra que le propulseur électrique permet le transit dans l'espace libre ou en orbite de la structure principale.

On entend par corps céleste, un corps distinct de la Terre et doté d'un sol tel qu'une planète, une lune ou un astéroïde.

Le propulseur chimique peut être un propulseur monergol ou diergol.

Le carburant contenu dans le premier contenant est préférentiellement du monergol ou du diergol.

Préférentiellement, le propulseur électrique peut être un propulseur à moteurs ionique à grille ou un propulseur à courant de Hall.

Le carburant du propulseur électrique est préférentiellement, un gaz inerte, encore plus préférentiellement un gaz monoatomique tel que le Xénon, l'Argon ou le Krypton. Selon un mode de réalisation, le générateur solaire d'énergie électrique comprend des cellules photovoltaïques souples configurées pour être enroulées et déroulées autour d'un même axe.

Selon un mode de réalisation, le générateur solaire d'énergie électrique à géométrie variable comprend au moins deux cellules photovoltaïques ou toile souples pouvant être pliées et dépliées par rapport à un même axe.

Les documents FR 2 998 876 et FR 3 024 227 décrivent l'utilisation de telles cellules photovoltaïques souples ou toiles souples. Tel que décrit dans ces documents, une telle toile souple peut être enroulée ou déroulée à l'aide d'une structure ou dispositif déployable telle que décrite dans ces documents.
A cet effet, la structure ou dispositif déployable et son procédé, le cas échéant, peuvent être associés au présent engin spatial. Le document US2012000575 A1 divulgue un transfert d'énergie électrique entre deux engins spatiaux. Le document US2019248515 A1 divulgue un engin spatial modulaire selon l'art de la technique.

Dans la présente description, le terme « enroulé » signifie un état rétracté et le terme déroulé signifie un état déployé.

Selon un mode de réalisation, l'engin spatial comprend une structure porteuse pour l'emport d'une charge utile, la structure porteuse étant configurée pour être couplée et découplée au premier contenant et au deuxième contenant.

Selon un mode de réalisation, le générateur solaire d'énergie électrique est équipé d'un moyen de transfert d'énergie électrique filaire et/ou par ondes courtes distances et/ou par laser.

Optionnellement, le moyen de transfert de l'énergie électrique filaire peut être connecté à l'engin client à l'aide d'un bras robotisé ou manuellement par un astronaute.

Selon un mode de réalisation, la structure principale comprend au moins un troisième contenant de carburant destiné au propulseur chimique pour permettre à l'engin spatial de remonter en orbite depuis un corps céleste.

L'au moins un troisième contenant forme une réserve en carburant permettant le redécollage de l'engin spatial depuis le corps céleste.

Un tel troisième contenant peut être attaché à la structure principale et lui être couplé à l'engin spatial pour alimenter en carburant le propulseur chimique afin d'assurer la mise en orbite de l'engin spatial depuis le corps céleste.

Bien entendu, le carburant contenu dans ce troisième contenant est préférentiellement du monergol ou du diergol.

Selon un mode de réalisation, la structure principale comprend des moyens d'accostage configurés pour coupler l'engin spatial à un engin client.

De tels moyens d'accostage permettent de stabiliser l'engin spatial à l'engin client pour faciliter la distribution d'énergie électrique à un engin client situé en orbite ou dans l'espace libre.

Selon un mode de réalisation, la structure principale comprend des moyens d'atterrissage configurés pour permettre à l'engin spatial d'atterrir sur un corps céleste. Selon un mode de réalisation, l'engin spatial comprend des moyens de transfert de carburant pour assurer le ravitaillement en carburant de l'engin spatial.

A titre d'exemple, on pourra prévoir qu'un cargo ravitailleur assure le ravitaillement de l'engin spatial en carburant à l'aide des moyens de transfert de carburant.

De tels moyens de ravitaillement peuvent être formés par des connecteurs et des conduits de distribution.

De tels moyens de transfert de carburant peuvent être prévus pour ravitailler l'engin spatial en carburant pour la propulsion chimique ou la propulsion électrique.
des modes de réalisation peuvent également concerner un procédé de distribution d'énergie électrique à au moins un engin client (2) situé en un point dans l'espace libre, en orbite ou sur un corps céleste, à l'aide d'un engin spatial tel que défini précédemment, comprenant une étape de transit de l'engin spatial préalablement mis en orbite, vers un engin client situé dans l'espace libre, en orbite ou sur un autre corps céleste, en utilisant le propulseur électrique et le générateur solaire d'énergie électrique déployé après la mise en orbite de l'engin spatial.

Selon un mode de réalisation, le procédé comprend des étapes de : accostage de l'engin spatial à un engin client situé dans l'espace libre ou en orbite ; et distribution de l'énergie électrique produite par le générateur solaire d'énergie électrique à l'engin client.

Selon un mode de réalisation, le procédé comprend des étapes de :
mise en orbite de l'engin spatial autour du corps céleste ;
rétractation du générateur solaire d'énergie électrique ;
découplage du premier contenant de la structure principale ;
couplage de la structure principale au deuxième contenant ;
découplage du premier contenant du deuxième contenant ;
atterrissage de l'engin spatial au sol du corps céleste ;
déploiement du générateur solaire d'énergie électrique ; et
distribution de l'énergie électrique générée par le générateur solaire d'énergie électrique à un engin client sur le corps céleste.

Selon un mode de réalisation, l'engin spatial comprend la structure porteuse définie précédemment embarquant une charge utile, dans ce cas, le procédé comprend une étape de déchargement de la structure principale sur site de l'engin client ou pour fournir l'engin client en ravitaillement.

La structure porteuse est avantageusement disposée entre le premier contenant et la deuxième contenant.

Selon un mode de réalisation, dans le cas d'une poursuite de mission de distribution d'énergie électrique vers un autre engin client, le procédé comprend des étapes de : rétractation du générateur solaire d'énergie électrique ; remplissage du deuxième contenant ou alternativement couplage de l'au moins un troisième contenant à la structure principale pour alimenter en carburant le propulseur chimique ; et décollage pour amener l'engin spatial en orbite autour du corps céleste.

Selon un mode de réalisation, le procédé comprend des étapes de : découplage d'un troisième contenant de la structure principale ; ravitaillement en carburant, en orbite ou dans l'espace libre, pour le propulseur électrique et le propulseur chimique, et transit de l'engin spatial vers un engin client.

L'étape de ravitaillement peut consister à ravitailler le premier contenant et/ou le deuxième contenant en carburant ou alternativement, à équiper l'engin spatial d'un autre premier contenant et d'un autre deuxième contenant pré-remplis de carburant. On comprendra que dans le cas d'un ravitaillement des premier contenant et/ou deuxième contenant, ces derniers auront été préalablement récupérés.

Selon d'autres caractéristiques de ce deuxième mode de réalisation, le procédé comprenant une étape de transit de l'engin spatial vers un autre engin client situé dans l'espace libre, en orbite ou sur un corps céleste à l'aide d'au moins le propulseur électrique et à l'aide du générateur solaire d'énergie électrique déployé après sa mise en orbite.

Des modes de réalisation peuvent également concerner un engin spatial pour la distribution d'énergie électrique à des engins clients en des points situés dans l'espace libre, en orbite et/ou sur un corps céleste, l'engin spatial comprenant : une structure principale équipée d'un propulseur électrique, d'un propulseur chimique et d'un générateur solaire d'énergie électrique à géométrie variable, au moins un premier contenant de carburant destiné au propulseur électrique, au moins un deuxième contenant de carburant destiné au propulseur chimique, l'engin spatial étant modulable afin de coupler : la structure principale alternativement à l'au moins un premier contenant pour la fourniture de carburant au propulseur électrique ou à l'au moins un deuxième contenant pour la fourniture de carburant au propulseur chimique, l'au moins un premier contenant et l'au moins un deuxième contenant pouvant être couplées/découplés l'un de l'autre, le générateur solaire d'énergie électrique à géométrie variable étant prévu pour être : déployé pour assurer la distribution d'énergie électrique à un engin client situé en un point dans l'espace libre, en orbite ou sur un corps céleste, et pour déplacer l'engin spatial vers un autre engin client situé en un autre point dans l'espace libre, en orbite ou sur un autre corps céleste, rétracté pour réaliser des phases d'amarrage dans l'espace libre ou en orbite, ainsi que des phases d'atterrissage vers un corps céleste et de décollage depuis un corps céleste pour un retour vers l'orbite.

Selon un mode de réalisation, le générateur solaire d'énergie électrique à géométrie variable comprend des cellules photovoltaïques souples pouvant être enroulées et déroulées autour d'un même axe.

Selon un mode de réalisation, le générateur solaire d'énergie électrique est équipé d'un moyen de transfert de l'énergie électrique filaire et/ou par ondes courtes distances et/ou par laser.

Selon un mode de réalisation, l'engin spatial comprend une structure porteuse pour l'emport d'une charge utile, la structure porteuse étant prévue pour être couplée/découplée à l'au moins un premier contenant et à l'au moins un deuxième contenant.

Selon un mode de réalisation, la structure principale comprend au moins un troisième contenant de carburant destiné au propulseur chimique pour assurer la remontée en orbite de l'engin spatial depuis un corps céleste.

Selon un mode de réalisation, la structure principale comprend des moyens d'accostage permettant de coupler l'engin spatial à l'engin client.

Selon un mode de réalisation, la structure principale comprend des moyens d'atterrissage permettant d'assurer l'atterrissage de l'engin spatial sur un corps céleste. Selon un mode de réalisation, l'engin spatial comprend des moyens de transfert de carburant pour assurer le ravitaillement en carburant de l'engin spatial.

Des modes de réalisation peuvent également concerner un procédé de distribution d'énergie électrique en des engins clients en points situés dans l'espace libre, en orbite et/ou sur un corps céleste à au moins un engin client à l'aide d'un engin spatial tel que défini précédemment, l'engin spatial étant préalablement mis en orbite, le procédé comprenant une étape de transit de l'engin spatial vers un engin client situé dans l'espace libre, en orbite ou sur un corps céleste à l'aide d'au moins le propulseur électrique et à l'aide du générateur solaire d'énergie électrique déployé après sa mise en orbite.

Selon un mode de réalisation, dans le cas d'un engin client dans l'espace libre ou en orbite, le procédé comprend : une étape d'accostage de l'engin spatial à l'engin client ; une étape de distribution de l'énergie électrique produite par le générateur solaire d'énergie électrique à l'engin client.

Selon un mode de réalisation, dans le cas d'un engin client sur un corps céleste, le procédé comprend : une étape de mise en orbite de l'engin spatial autour du corps céleste ; une étape de rétractation du générateur solaire d'énergie électrique ; une étape de découplage du premier contenant de la structure principale ; une étape de couplage de la structure principale au deuxième contenant ; une étape de découplage du premier contenant du deuxième contenant ; une étape d'atterrissage de l'engin spatial au sol du corps céleste ; et une étape de déploiement du générateur solaire d'énergie électrique ; une étape de distribution de l'énergie électrique générée par le générateur solaire d'énergie électrique.

Selon un mode de réalisation, dans le cas d'une poursuite de mission de distribution d'énergie électrique vers un autre engin client, le procédé comprend : une étape de rétractation du générateur solaire d'énergie électrique ; une étape de remplissage du deuxième contenant ou alternativement une étape de couplage de l'au moins un troisième contenant à la structure principale pour alimentation en carburant du propulseur chimique ; une étape de décollage pour amener l'engin spatial en orbite autour du corps céleste.

Selon un mode de réalisation, le procédé comprend : lorsque l'engin spatial est équipé d'au moins un troisième contenant, une étape de découplage de l'au moins un troisième contenant de la structure principale ; une étape de ravitaillement en orbite ou dans l'espace libre en carburant pour le propulseur électrique et le propulseur chimique de l'engin spatial, et une étape de transit de l'engin spatial vers un autre engin client.

D'autres caractéristiques et avantages apparaîtront à la lecture de la description nullement limitative qui suit et des figures annexées qui illustrent de manière schématique plusieurs modes de réalisation.
La figure 1 représente une vue schématique d'un engin spatial selon un mode de réalisation équipé d'une structure principale, d'un premier contenant, d'une structure porteuse d'une charge utile et d'un deuxième contenant, et monté sur un lanceur en vue de sa mise en orbite terrestre.
La figure 2 représente l'engin spatial mis en orbite terrestre.
La figure 3 représente l'engin spatial dans une étape de rétraction de son générateur solaire d'énergie électrique qu'il embarque en vue de son atterrissage sur un corps céleste.
La figure 4 représente l'engin spatial dans une étape de découplage de la structure principale du premier contenant et de son couplage au deuxième contenant en vue de son atterrissage sur le corps céleste.
La figure 5 représente une étape de découplage du premier contenant par rapport à la charge utile en vue de son atterrissage sur le corps céleste.
La figure 6 représente une étape de réorientation de l'engin spatial en vue de son atterrissage sur le corps céleste.
La figure 7 représente une étape de descente de l'engin spatial pour son atterrissage sur le sol du corps céleste.
La figure 8 représente des étapes de déchargement de l'engin spatial et de distribution de l'énergie électrique fourni par le générateur solaire d'énergie électrique à un engin client.
La figure 9 représente des étapes de lancement en orbite de l'engin spatial depuis le sol du corps céleste.
La figure 10 représente des étapes de réapprovisionnement en carburant de l'engin spatial avant son envoi vers un autre engin client.
La figure 11 représente des étapes de réapprovisionnement en carburant de l'engin spatial avant son envoi vers un autre engin client selon une variante de réalisation.
La figure 12 est une vue isométrique agrandie de la structure principale de l'engin spatial comprenant un générateur solaire d'énergie électrique en position rétracté, selon un mode de réalisation.
La figure 13 est une vue agrandie de la structure principale de l'engin spatial représentant le générateur solaire d'énergie électrique en position déployée, selon un mode de réalisation.
La figure 14 est une vue du dessus de la structure principale de l'engin spatial et du générateur solaire d'énergie électrique en position déployée, selon un mode de réalisation.
La figure 15 est une vue agrandie du dessus de la structure principale de l'engin spatial représenté à la figure 14.
La figure 16 est une vue agrandie du dessous de la structure principale de l'engin spatial représenté à la figure 14.

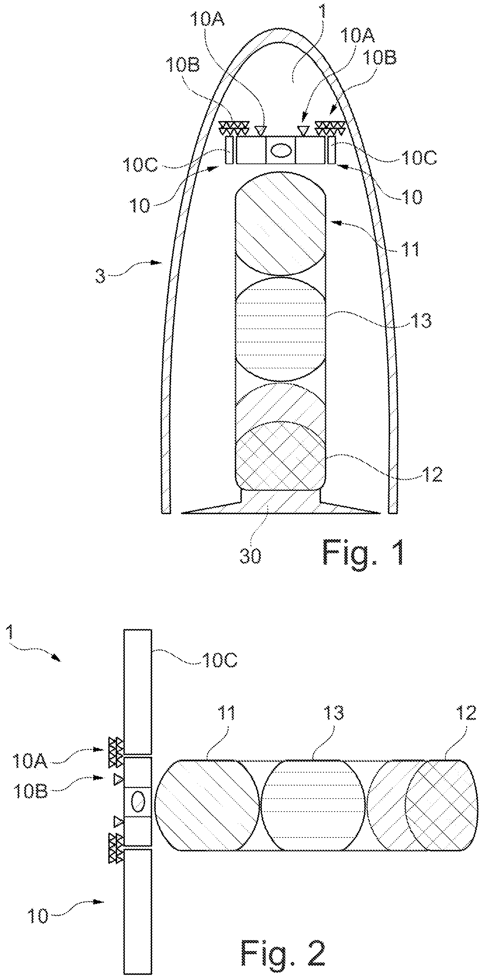

A la figure 1, on a représenté un engin spatial 1 pour la distribution d'énergie électrique à des engins clients 2 en des points situés dans l'espace libre, en orbite et/ou sur un corps céleste.

L'engin spatial 1 comprend une structure principale 10, au moins un premier contenant 11 de carburant, une structure porteuse 13 d'une charge utile et au moins un deuxième contenant 12 de carburant empilés et disposés dans un seul lanceur 3.

Ainsi, la mise en orbite terrestre de l'engin spatial 1 peut nécessiter les besoins d'un unique lanceur 3.

La structure principale 10 est équipée des propulseurs, à savoir un propulseur électrique 10A et un propulseur chimique 10B.

Par ailleurs, la structure principale 10 est équipée d'un générateur solaire 10C d'énergie électrique faisant partie intégrante de la structure principale 10.

Le premier contenant 11 forme un réservoir de carburant destiné à la propulsion électrique. Le carburant du premier contenant 11 peut être un gaz inerte, préférentiellement tel que le Xénon, l'argon ou le Krypton.

Le deuxième contenant 12 forme un réservoir de carburant destiné à la propulsion chimique. Le carburant du deuxième contenant 12 peut être un monergol ou bien un diergol, liquide et/ou solide.

La structure porteuse 13 est prévue pour l'emport d'une charge utile destinée à l'engin client 2 ou au site de cet engin client 2.

Particulièrement, l'engin spatial 1 présente une configuration modulaire de sorte qu'il puisse s'adapter aux besoins de plusieurs missions consécutives.

En l'occurrence, la structure porteuse 13, le premier contenant 11 et le deuxième contenant 12 forment un empilement logistique et peuvent être couplés ou découplés les uns des autres.

La structure principale 10 peut alternativement être couplée/découplée au premier contenant 11 ou au deuxième contenant 12.

L'arrangement de la structure porteuse 13 disposée entre le premier contenant 11 et le deuxième contenant 12 présente l'avantage de permettre à la structure principale 10 de pouvoir s'alimenter en carburant pour la propulsion électrique ou bien pour la propulsion chimique.

Bien entendu, la structure principale 10 est équipée d'une unité de pilotage permettant le transit de l'engin spatial 1 et pour permettre ces manœuvres.

Lorsque la structure principale 10 est couplée au premier contenant 11, elle permet la fourniture de carburant au propulseur électrique 10A, alors que lorsqu'elle est couplée deuxième contenant 12, elle permet la fourniture de carburant au propulseur chimique 10B.

L'unité de pilotage est configurée pour assurer le couplage et le découplage de la structure principale 10 à l'un des contenants 11, 12 en fonction des besoins de mission. Dans une configuration initiale prévue pour la mise en orbite terrestre de l'engin spatial 1, la structure principale 10 est couplée au premier contenant 11 pour l'alimentation de la propulsion électrique, afin de permettre le transit dans l'espace une fois en orbite terrestre.

Le générateur solaire 10C est à géométrie variable. En d'autres termes, il est prévu pour être déployé ou rétracté en fonction des besoins de mission.

Particulièrement, le générateur solaire 10C est prévu pour être déployé pour assurer la distribution d'énergie électrique à un engin client 2 situé en un point dans l'espace libre, en orbite ou sur un corps céleste, et rétracté pour permettre le déplacement de l'engin spatial 1 vers un autre engin client 2 situé en un autre point dans l'espace libre, en orbite ou sur un autre corps céleste.

Le générateur solaire 10C pourra comprendre des cellules photovoltaïques souples ou une toile souple de cellules photovoltaïques pouvant être enroulées et déroulées autour d'un même axe, de sorte que les cellules déroulées couvrent une grande surface de rayonnement solaire. Ainsi, de telles cellules photovoltaïques permettent d'augmenter significativement la capacité de production et de distribution d'énergie électrique d'un tel engin spatial 1.

On va maintenant décrire un exemple de missions successives mettant en œuvre l'engin spatial, selon un mode de réalisation, pour permettre la distribution d'énergie électrique à des engins clients en des points dans l'espace libre, en orbite ou sur un corps céleste.

La configuration de la figure 1 représente un l'engin spatial 1 disposé dans un lanceur 3 en vue de sa mise en orbite terrestre depuis un site de lancement.

L'engin spatial 1 tel que décrit précédemment forme un empilement pouvant tenir dans un unique lanceur 3. Le deuxième contenant 12 de l'engin spatial 1 est couplé à un socle 30 du lanceur 3 pour le maintien stable de l'engin spatial 1 durant sa phase de mise en orbite terrestre.

A la figure 2, on a représenté l'engin spatial 1 en orbite terrestre où il a été détaché du socle 30 du lanceur 3 et séparé du lanceur 3.

Une fois placé en orbite terrestre, le générateur solaire 10C peut être déployé.

Une étape de transfert de l'engin spatial 1 à destination d'un engin client 2 peut alors être engagée à l'aide de la propulsion électrique alimentée par l'énergie électrique fournie par le générateur solaire 10C déployé et par le carburant du premier contenant 11 auquel est couplée la structure principale 10.

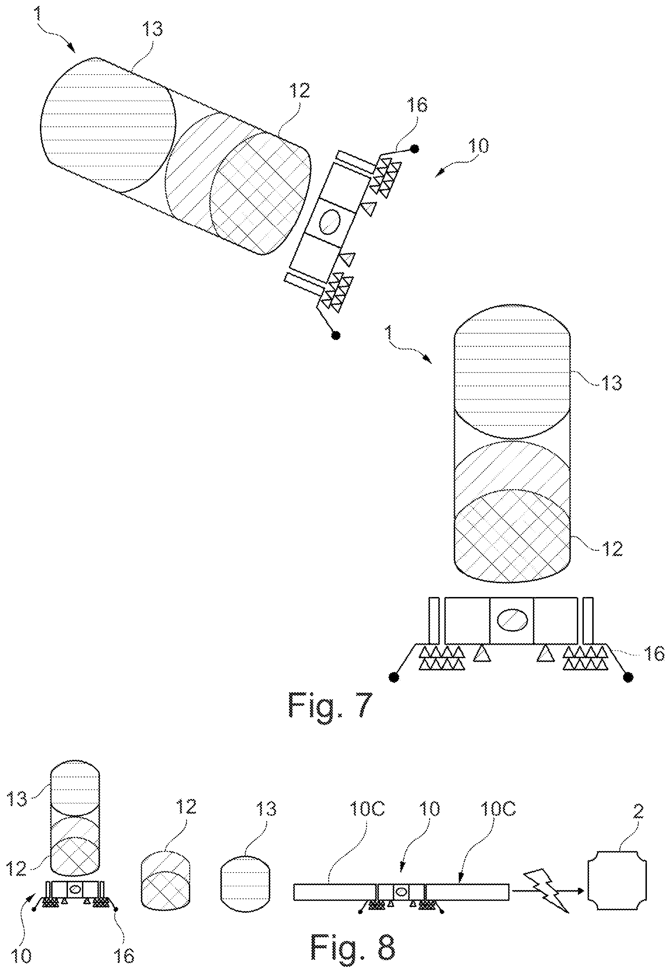

Dans une configuration d'une première mission destinée à distribuer de l'énergie électrique à un premier engin client 2 (cf. figure 8) dans l'espace libre ou en orbite, il peut être prévu des moyens d'accostage permettant de coupler l'engin spatial 1 à l'engin client 2.

Le générateur solaire 10C est équipé d'un moyen de transfert de l'énergie électrique filaire et/ou par ondes courtes distances et/ou par laser et peut une fois déployé distribuer de l'énergie électrique à l'engin client 2.

On peut prévoir que durant la phase d'accostage le générateur solaire 10C soit rétracté et déployé une fois cette phase achevée.

L'engin spatial 1 peut ensuite réaliser une mission de distribution d'énergie électrique successivement à celle qu'il vient d'accomplir.

En l'occurrence, il peut être dirigé vers un corps céleste tel que la Lune sur lequel est disposé au sol un deuxième engin client 2.

Dans ce cas, l'engin spatial 1 est d'abord mis en orbite autour du corps céleste comprenant le deuxième engin client 2.

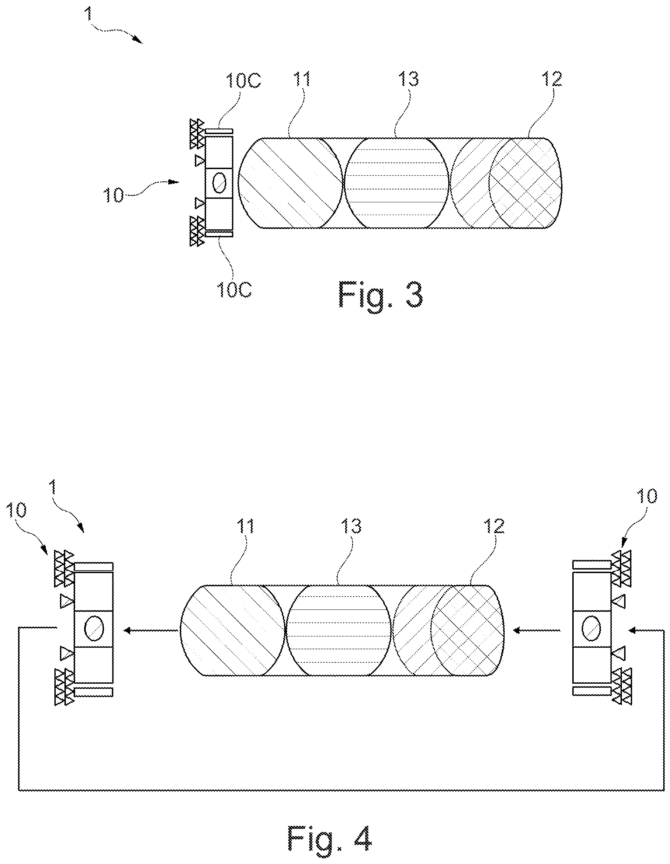

Puis, tel qu'illustré par la figure 3, le générateur solaire 10C d'énergie électrique est rétracté pour préparer la phase d'atterrissage de l'engin spatial 1 au sol du corps céleste.

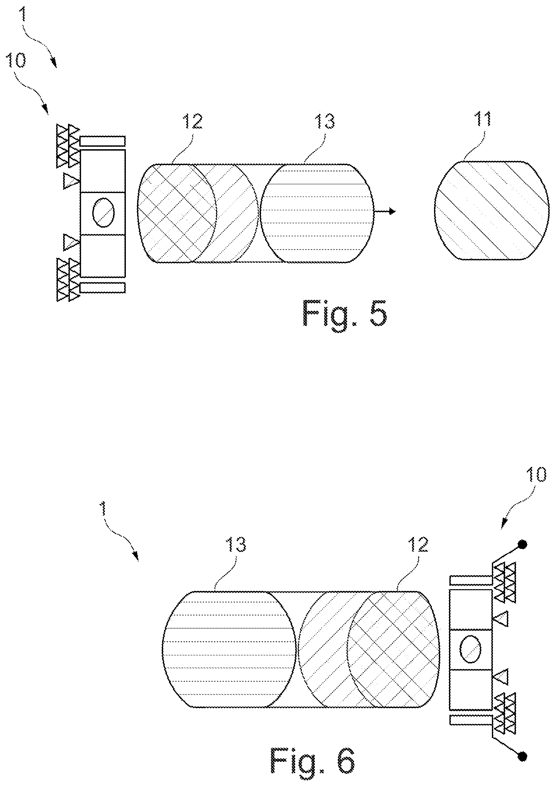

A cet effet, l'engin spatial comprend des moyens d'atterrissage configurés pour assurer la phase d'atterrissage. Par exemple, l'engin spatial comprend un train d'atterrissage 16 (cf. figure 6).

Tel que représenté à la figure 4, la structure principale 10 est alors découplée du premier contenant 11 et elle est pilotée pour permettre son couplage au deuxième contenant 12. Alors, le premier contenant 11 peut être découplé du deuxième contenant 12 (figure 5). L'engin spatial 1 ainsi modulé comprend la structure porteuse 13 de la charge utile couplée au deuxième contenant 12. Il est adapté à la réalisation d'une phase d'atterrissage de l'engin spatial 1 au sol du corps céleste puisqu'il permet maintenant l'utilisation de la propulsion chimique.

La figure 6 illustre la réorientation de l'engin spatial 1 en orbite pour préparer sa sortie d'orbite et son atterrissage sur le corps céleste et la figure 7 illustre la phase d'atterrissage de l'engin spatial 1 sur le corps céleste.

L'engin spatial 1 illustré par les figures 6 et 7 comprend le train d'atterrissage 16 en position d'ouverture.

Tel que représenté à la figure 8, une fois au sol, l'engin spatial 1 peut être déchargé du deuxième contenant 12 et de la structure porteuse 13 comprenant la charge utile à destination du site où se trouve l'engin client 2.

Le générateur solaire 10C d'énergie électrique peut alors être déployé pour la distribution d'énergie électrique à l'engin client 2.

L'engin spatial 1 peut à nouveau réaliser une mission de distribution d'énergie électrique successivement à celle qu'il vient d'accomplir.

Par exemple, il peut être dirigé vers un autre corps céleste sur lequel est disposé au sol un troisième engin client 2.

Pour cela, le générateur solaire 10C est préalablement rétracté.

Il est prévu au moins un troisième contenant 14 pouvant être attaché à la structure principale 10 ou bien être fourni depuis le site sur lequel est situé le deuxième engin client 2.

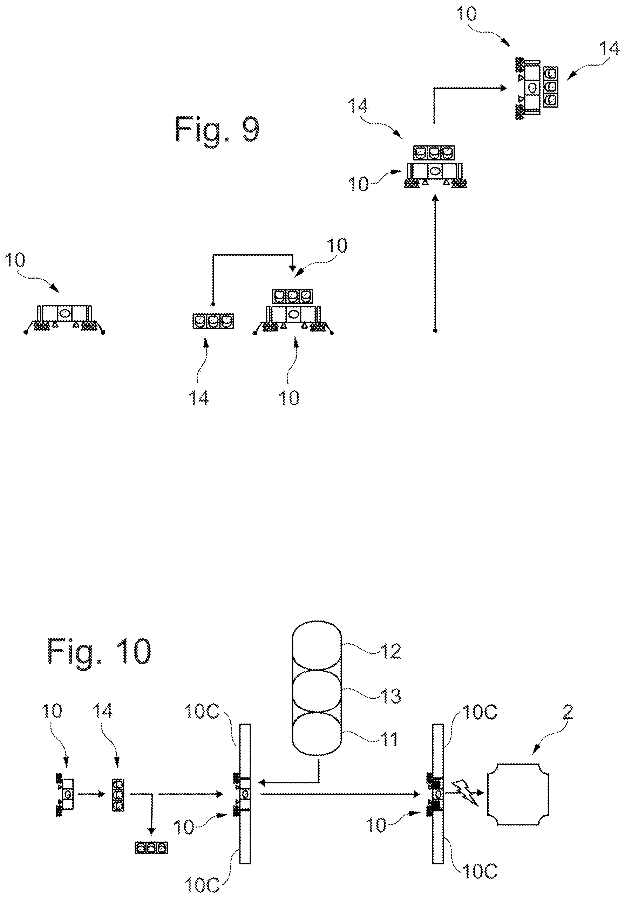

La figure 9 illustre la mise en orbite de l'engin spatial 1 depuis le sol du corps céleste comprenant le deuxième engin client 2. Lors de la mise en orbite de l'engin spatial, le train d'atterrissage 16 se referme en position escamotée. La structure principale 10 préalablement séparée de la structure porteuse 13 et du deuxième contenant 12 peut alors recevoir le troisième contenant 14 comprenant un carburant pour la propulsion chimique.

La structure principale 10 peut alors être alimentée en carburant pour la propulsion chimique afin de permettre le décollage de l'engin spatial 1 et sa mise en orbite autour du corps céleste depuis lequel il décolle.

La figure 10 illustre la préparation de l'engin spatial 1 pour sa poursuite de mission de distribution d'énergie électrique vers la destination d'un troisième engin client 2.

Une fois en orbite tel que précédemment décrit, le troisième contenant 14 est séparé de la structure principale 10. Puis, le générateur solaire 10C est déployé. Enfin, la structure principale 10 peut se coupler à un autre premier contenant 11 d'un nouvel empilement logistique prévu pour la mission suivante ou alternativement des moyens de transfert de carburant peuvent assurer le ravitaillement en carburant du premier contenant 11 et du deuxième contenant 12 préalablement récupérés.

Le nouvel empilement logistique peut être semblable à la configuration initiale, à savoir : un premier contenant 11, un deuxième contenant 12 et une structure porteuse 13 disposée entre les deux contenants 11, 12. Alors l'engin spatial 1 nouvellement formé peut être conduit vers le troisième engin client 2 sur le deuxième corps céleste selon les étapes précédemment décrites.

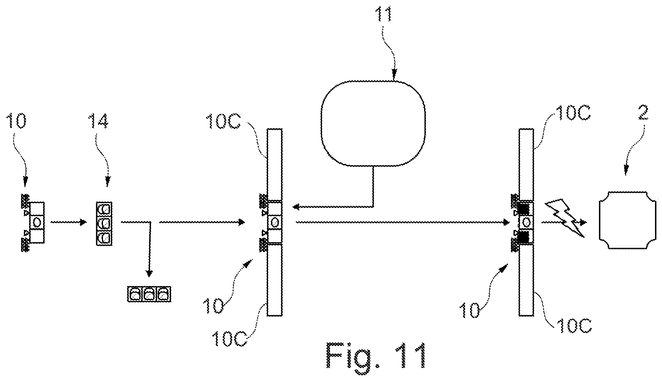

Dans un mode de réalisation illustré par la figure 11, la structure principale 10 peut se coupler à un autre premier contenant 11 de carburant destiné au propulseur électrique uniquement, prévu pour la mission suivante. Une étape de transfert de l'engin spatial 1 à destination d'un engin client 2 peut alors être engagée à l'aide de la propulsion électrique alimentée par l'énergie électrique fournie par le générateur solaire 10C déployé et par le carburant du premier contenant 11 auquel est couplée la structure principale 10.

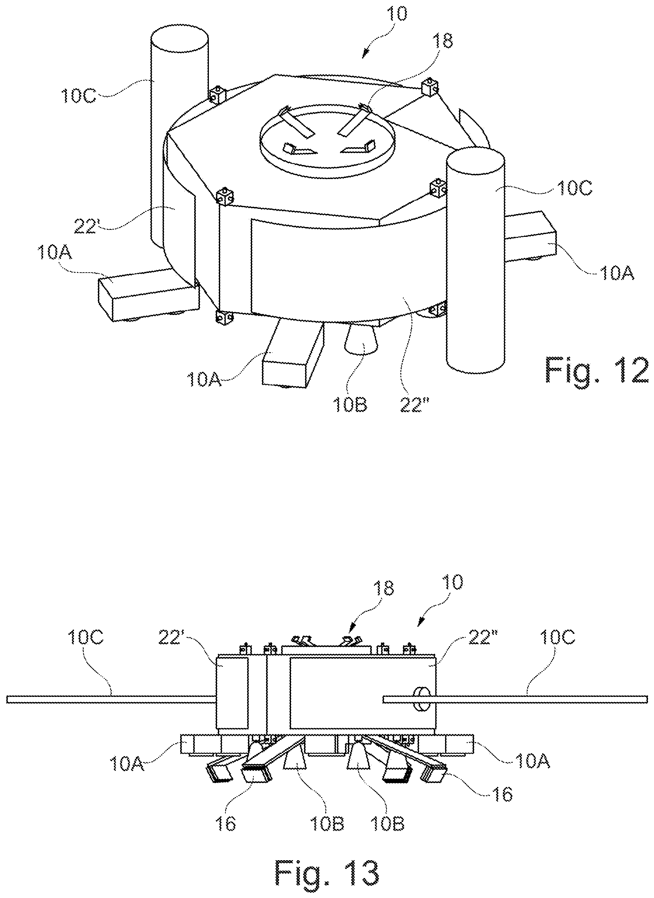

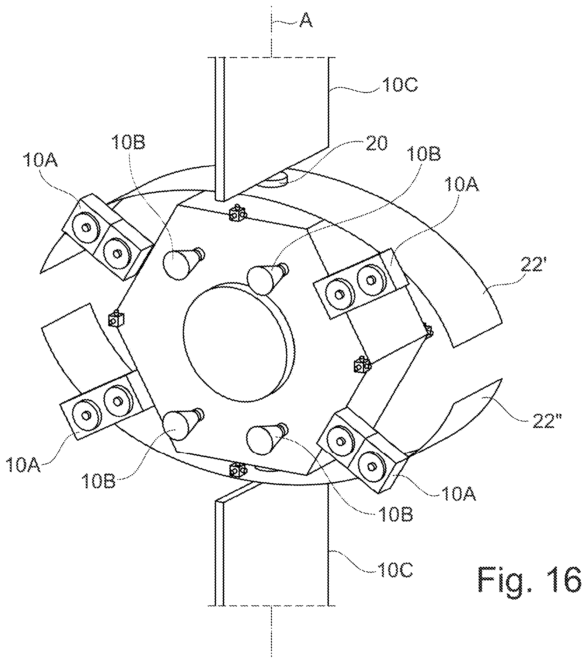

Les figures 12 à 16 sont des vues de la structure principale 10 selon un mode de réalisation.

La figure 12 représente la structure principale 10 en orbite, dans laquelle le générateur solaire 10C d'énergie électrique à géométrie variable est rétracté. Dans le mode de réalisation illustré par la figure 12, le générateur solaire 10C d'énergie électrique comprend deux toiles formées chacune d'une ou plusieurs cellules photovoltaïques souples, et qui sont chacune enroulée autour d'un même axe.

La structure principale 10 comprend le propulseur électrique ou ensemble propulsif électrique comportant une pluralité de moteurs électriques 10A.

La structure principale 10 comprend le propulseur électrique ou ensemble propulsif chimique comportant une pluralité de moteurs chimiques 10B.

La structure principale 10 comprend un système d'amarrage et de transfert de carburant 18 configuré pour assurer un couplage/découplage entre la structure principale 10 et les contenants 11, 12, 14 de carburant afin d'assurer le transfert de carburant.

Dans le mode de réalisation illustré par la figure 12, le train d'atterrissage est rétracté en position d'escamotage (non visible).

La figure 13 illustre la structure principale 10 au sol, par exemple posé sur le sol d'un corps céleste dans laquelle le générateur solaire 10C d'énergie électrique à géométrie variable est déployé.

Dans le mode de réalisation illustré par les figures 13 à 16, le générateur solaire 10C d'énergie électrique comprend deux toiles de cellules photovoltaïques souples qui sont chacune déroulée.

Le train d'atterrissage 16 est déployé, c'est-à-dire en position d'ouverture pour assurer l'atterrissage de la structure principale 10 et son maintien au sol d'un corps céleste (tel que la Lune).

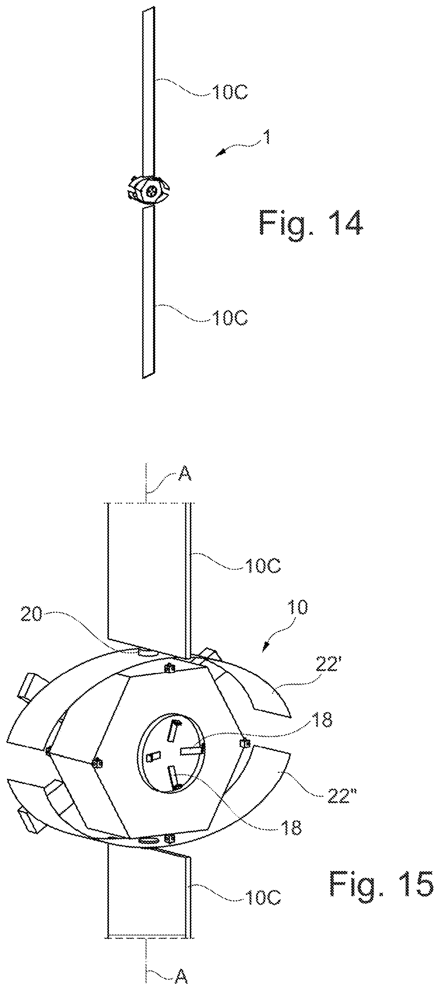

Les figures 14 et 15 sont des vues du dessus de la structure principale 10 avec le générateur solaire 10C d'énergie électrique à géométrie variable déployé.

Dans le mode de réalisation illustré par les figures 12, 13 et 16, la structure principale 10 comprend un propulseur électrique comportant plusieurs moteurs électriques 10A formant un ensemble propulsif électrique. La structure principale 10 comprend un propulseur électrique comportant les moteurs chimiques 10B formant un ensemble propulsif chimique.

Comme l'illustre la figure 15, la structure principale 10 peut comprendre un dispositif rotatif 20 d'orientation pour entrainer le générateur solaire 10C d'énergie électrique en rotation autour d'un axe vertical ou longitudinal A. Par exemple, le dispositif rotatif 20 est configuré pour entrainer la rotation de l'enroulement de cellules photovoltaïques sur 360° autour de l'axe longitudinal ou vertical A.

Le dispositif rotatif permet de suivre la position du soleil et d'orienter les cellules photovoltaïques face au soleil.

Dans les modes de réalisation illustrés par les figures 12 à 16, l'engin spatial comprend un dispositif optionnel de dissipation d'énergie . Par exemple, le dispositif de dissipation d'énergie comprend deux radiateurs 22', 22" qui s'étendent chacun sur une moitié de surface de la structure principale 10 de manière à offrir la plus grande surface disponible autour de la structure principale 10.

Bien évidemment, la présente description n'est pas limitée aux exemples qui viennent d'être décrits et de nombreux aménagements peuvent être apportés à ces exemples sans sortir du cadre des revendications annexées.

## Revendications

1. Engin spatial (1) pour distribuer de l'énergie électrique à des engins clients (2), l'engin spatial (1) comprenant :
une structure principale (10) équipée d'un propulseur électrique (10A), d'un propulseur chimique (10B) et d'un générateur solaire (10C) d'énergie électrique, à géométrie variable,
au moins un premier contenant (11) de carburant destiné au propulseur électrique (10A), et
au moins un deuxième contenant (12) de carburant destiné au propulseur chimique (10B), et
dans lequel :
l'engin spatial (1) est modulable pour coupler de manière amovible la structure principale (10) alternativement au premier contenant (11) pour fournir du carburant au propulseur électrique (10A), ou au deuxième contenant (12) pour fournir du carburant au propulseur chimique (10B), et pour coupler de manière amovible le premier contenant (11) et le deuxième contenant (12) l'un à l'autre,
le générateur solaire (10C) d'énergie électrique est configuré pour être :
déployé pour distribuer de l'énergie électrique à un premier engin client (2) situé en un premier point dans l'espace libre, en orbite ou sur un premier corps céleste, et pour déplacer l'engin spatial (1) vers un second engin client (2) situé en un second point dans l'espace libre, en orbite ou sur un second corps céleste, et
rétracté pour réaliser des phases d'amarrage avec le premier ou second engin client dans l'espace libre ou en orbite, ainsi que des phases d'atterrissage vers un troisième corps céleste et de décollage depuis le troisième corps céleste pour un retour en orbite.

2. Engin spatial (1) selon la revendication 1, dans lequel le générateur solaire (10C) d'énergie électrique comprend des cellules photovoltaïques souples configurées pour être enroulées et déroulées autour d'un même axe.

3. Engin spatial (1) selon l'une quelconque des revendications 1 et 2, dans lequel le générateur solaire (10C) d'énergie électrique est équipé d'un moyen de transfert d'énergie électrique filaire et/ou par ondes courtes distances et/ou par laser.

4. Engin spatial (1) selon l'une quelconque des revendications 1 à 3, comprenant une structure porteuse (13) pour l'emport d'une charge utile, la structure porteuse (13) étant configurée pour être couplée et découplée au premier contenant (11) et au deuxième contenant (12).

5. Engin spatial (1) selon l'une quelconque des revendications 1 à 4, dans lequel la structure principale (10) comprend au moins un troisième contenant (14) de carburant destiné au propulseur chimique (10B) pour permettre à l'engin spatial (1) de remonter en orbite depuis un corps céleste.

6. Engin spatial (1) selon l'une quelconque des revendications 1 à 5, dans lequel la structure principale (10) comprend des moyens d'accostage configurés pour coupler l'engin spatial (1) à un engin client (2).

7. Engin spatial (1) selon l'une quelconque des revendications 1 à 6, dans lequel la structure principale (10) comprend des moyens d'atterrissage (16) configurés pour permettre à l'engin spatial (1) d'atterrir sur un corps céleste.

8. Engin spatial (1) selon l'une quelconque des revendications 1 à 7, comprenant des moyens de transfert de carburant pour assurer le ravitaillement en carburant de l'engin spatial (1).

9. Procédé de distribution d'énergie électrique à au moins un engin client (2) situé en un point dans l'espace libre, en orbite ou sur un corps céleste, à l'aide d'un engin spatial (1) selon l'une quelconque des revendications 1 à 8, comprenant une étape de transit de l'engin spatial (1) préalablement mis en orbite, vers un engin client (2) situé dans l'espace libre, en orbite ou sur un corps céleste, en utilisant le propulseur électrique (10A) et le générateur solaire (10C) d'énergie électrique déployé après la mise en orbite de l'engin spatial.

10. Procédé selon la revendication 9, comprenant des étapes de :
accostage de l'engin spatial (1) à un engin client (2) situé dans l'espace libre ou en orbite ; et
distribution de l'énergie électrique produite par le générateur solaire (10C) d'énergie électrique à l'engin client (2).

11. Procédé selon l'une quelconque des revendications 9 et 10, comprenant des étapes de :
mise en orbite de l'engin spatial (1) autour d'un corps céleste ;
rétractation du générateur solaire (10C) d'énergie électrique ;
découplage du premier contenant (11) de la structure principale (10) ;
couplage de la structure principale (10) au deuxième contenant (12) ;
découplage du premier contenant (11) du deuxième contenant (12) ;
atterrissage de l'engin spatial (1) au sol du corps céleste ;
déploiement du générateur solaire (10C) d'énergie électrique ; et
distribution de l'énergie électrique générée par le générateur solaire (10C) d'énergie électrique à un engin client (2) sur le corps céleste.

12. Procédé selon l'une quelconque des revendications 9 à 11, dans lequel, dans le cas d'une poursuite de mission de distribution d'énergie électrique vers un autre engin client, le procédé comprend des étapes de :
rétractation du générateur solaire (10C) d'énergie électrique ;
remplissage du deuxième contenant (12), ou alternativement couplage d'au moins un troisième contenant (14) à la structure principale (10) pour alimenter en carburant le propulseur chimique (10B) ; et
décollage pour amener l'engin spatial (1) en orbite autour du corps céleste.

13. Procédé selon l'une quelconque des revendications 9 à 12,comprenant des étapes de :
découplage d'un troisième contenant (14) de la structure principale (10) ;
une étape de ravitaillement en carburant, en orbite ou dans l'espace libre, pour le propulseur électrique (10A) et le propulseur chimique (10B) ; et
une étape de transit de l'engin spatial (1) vers un engin client (2).

## Patentansprüche

1. Raumfahrzeug (1) zur Verteilung von elektrischer Energie an Kundenfahrzeuge (2), wobei das Raumfahrzeug (1) Folgendes umfasst:
eine Hauptstruktur (10), die mit einem elektrischen Triebwerk (10A), einem chemischen Triebwerk (10B) und einem Solargenerator (10C) für elektrische Energie mit variabler Geometrie ausgestattet ist,
mindestens einen ersten Kraftstoffbehälter (11) für das elektrische Triebwerk (10A), und
mindestens einen zweiten Kraftstoffbehälter (12) für das chemische Triebwerk (10B), und
wobei:
das Raumfahrzeug (1) modulierbar ist, um die Hauptstruktur (10) abwechselnd mit dem ersten Behälter (11) zur Bereitstellung von Kraftstoff für das elektrische Triebwerk (10A) oder mit dem zweiten Behälter (12) zur Bereitstellung von Kraftstoff für das chemische Triebwerk (10B) zu koppeln und um den ersten Behälter (11) und den zweiten Behälter (12) lösbar miteinander zu koppeln,
der Solargenerator (10C) für elektrische Energie so konfiguriert ist, dass er:
eingesetzt wird, um elektrische Energie an ein erstes Kundenfahrzeug (2) zu verteilen, das sich an einem ersten Punkt im freien Raum, in der Umlaufbahn oder auf einem ersten Himmelskörper befindet, und, um das Raumfahrzeug (1) zu einem zweiten Kundenfahrzeug (2) zu bewegen, das sich an einem zweiten Punkt im freien Raum, in der Umlaufbahn oder auf einem zweiten Himmelskörper befindet, und
eingezogen wird, um die Andockphasen mit dem ersten oder zweiten Kundenfahrzeug im freien Raum oder in der Umlaufbahn sowie die Landungsphasen zu einem dritten Himmelskörper und den Start von dem dritten Himmelskörper für die Rückkehr in die Umlaufbahn durchzuführen.

2. Raumfahrzeug (1) nach Anspruch 1, wobei der Solargenerator (10C) für elektrische Energie flexible Photovoltaikzellen umfasst, die so konfiguriert sind, dass sie um eine einzige Achse aufgewickelt und abgewickelt werden können.

3. Raumfahrzeug (1) nach einem der Ansprüche 1 und 2, wobei der Solargenerator (10C) für elektrische Energie mit einem Mittel zur Übertragung elektrischer Energie über Kabel und/oder Kurzwellen und/oder Laser ausgestattet ist.

4. Raumfahrzeug (1) nach einem der Ansprüche 1 bis 3, umfassend eine Tragstruktur (13) zum Tragen einer Nutzlast, wobei die Tragstruktur (13) so konfiguriert ist, dass sie mit dem ersten Behälter (11) und dem zweiten Behälter (12) gekoppelt und von diesen entkoppelt werden kann.

5. Raumfahrzeug (1) nach einem der Ansprüche 1 bis 4, wobei die Hauptstruktur (10) mindestens einen dritten Kraftstoffbehälter (14) für das chemische Triebwerk (10B) umfasst, um es dem Raumfahrzeug (1) zu ermöglichen, von einem Himmelskörper in die Umlaufbahn zurückzukehren.

6. Raumfahrzeug (1) nach einem der Ansprüche 1 bis 5, wobei die Hauptstruktur (10) Andockmittel umfasst, die so konfiguriert sind, dass sie das Raumfahrzeug (1) mit einem Kundenfahrzeug (2) koppeln.

7. Raumfahrzeug (1) nach einem der Ansprüche 1 bis 6, wobei die Hauptstruktur (10) Landemittel (16) umfasst, die so konfiguriert sind, dass das Raumfahrzeug (1) auf einem Himmelskörper landen kann.

8. Raumfahrzeug (1) nach einem der Ansprüche 1 bis 7, umfassend Kraftstofftransfermittel zur Versorgung des Raumfahrzeugs (1) mit Kraftstoff.

9. Verfahren zur Verteilung von elektrischer Energie an mindestens ein an einem Punkt im Freiraum, in der Umlaufbahn oder auf einem Himmelskörper befindliches Kundenfahrzeug (2) mithilfe eines Raumfahrzeugs (1) nach einem der Ansprüche 1 bis 8, umfassend einen Schritt des Transits des zuvor in die Umlaufbahn gebrachten Raumfahrzeugs (1) zu einem Kundenfahrzeug (2), das sich im Freiraum, in der Umlaufbahn oder auf einem Himmelskörper befindet, unter Verwendung des elektrischen Triebwerks (10A) und des Solargenerators (10C) für elektrische Energie, der nach dem Einbringen des Raumfahrzeugs in den Orbit eingesetzt wird.

10. Verfahren nach Anspruch 9, das folgende Schritte umfasst:
Andocken des Raumfahrzeugs (1) an ein Kundenfahrzeug (2), das sich im freien Raum oder in der Umlaufbahn befindet; und
Verteilung der vom Solargenerator (10C) für elektrische Energie erzeugten elektrischen Energie an das Kundenfahrzeug (2).

11. Verfahren nach einem der Ansprüche 9 oder 10, das folgende Schritte umfasst:
Einbringen des Raumfahrzeugs (1) in eine Umlaufbahn um einen Himmelskörper;
Einziehen des Solargenerators (10C) für elektrische Energie;
Entkoppeln des ersten Behälters (11) von der Hauptstruktur (10);
Koppeln der Hauptstruktur (10) an den zweiten Behälter (12);
Entkoppeln des ersten Behälters (11 ) von dem zweiten Behälter (12);
Landung des Raumfahrzeugs (1) auf dem Boden des Himmelskörpers;
Entfalten des Solargenerators (10C) für elektrische Energie; und
Verteilung der vom Solargenerator (10C) für elektrische Energie erzeugten elektrischen Energie auf ein Kundenfahrzeug (2) an dem Himmelskörper.

12. Verfahren nach einem der Ansprüche 9 bis 11, wobei das Verfahren im Falle der Fortsetzung eines Auftrags zur Verteilung elektrischer Energie an ein anderes Kundenfahrzeug folgende Schritte umfasst:
Einziehen des Solargenerators (10C) für elektrische Energie;
Befüllen des zweiten Behälters (12) oder alternativ Koppeln mindestens eines dritten Behälters (14) an die Hauptstruktur (10), um das chemische Triebwerk (10B) mit Kraftstoff zu versorgen; und
Start, um das Raumfahrzeug (1) um den Himmelskörper zu bewegen.

13. Verfahren nach einem der Ansprüche 9 bis 12, das folgende Schritte umfasst:
Entkopplung eines dritten Behälters (14) von der Hauptstruktur (10);
einen Schritt der Betankung mit Kraftstoff, in der Umlaufbahn oder im Freiraum, für das elektrische Triebwerk (10A) und das chemische Triebwerk (10B); und
einen Transitschritt vom Raumfahrzeug (1) zu einem Kundenfahrzeug (2).

## Claims

1. A spacecraft (1) for distributing electrical energy to client crafts (2), the spacecraft (1) comprising:
a main structure (10) equipped with an electric thruster (10A), a chemical thruster (10B) and a solar electrical energy generator (10C), with variable geometry,
at least one first fuel container (11) intended for the electric thruster (10A), and
at least one second fuel container (12) intended for the chemical thruster (10B), and
in which:
the spacecraft (1) is modular to removably couple the main structure (10) alternately to the first container (11) for supplying fuel to the electric thruster (10A), or to the second container (12) for supplying fuel to the chemical thruster (10B), and to removably couple the first container (11) and the second container (12) to each other,
the solar electrical energy generator (10C) is configured to be:
deployed to distribute the electrical energy to a first client craft (2) located at a first point in the free space, in orbit or on a first celestial body, and to displace the spacecraft (1) to a second craft client (2) located at a second point in the free space, in orbit or on a second celestial body, and
retracted to carry out mooring phases with the first or second client craft in the free space or in orbit, as well as phases of landing towards a third celestial body and taking-off from the third celestial body for a return to orbit.

2. The spacecraft (1) according to claim 1, wherein the solar electrical energy generator (10C) comprises flexible photovoltaic cells configured to be wound and unwound about a same axis.

3. The spacecraft (1) according to any one of claims 1 and 2, wherein the solar electrical energy generator (10C) is equipped with a means of transferring electrical energy by wire and/or by short distance waves and/or by laser.

4. The spacecraft (1) according to any one of claims 1 to 3, comprising a supporting structure (13) for carrying a payload, the supporting structure (13) being configured to be coupled and decoupled from the first container (11) and the second container (12).

5. The spacecraft (1) according to any one of claims 1 to 4, wherein the main structure (10) comprises at least one third fuel container (14) intended for the chemical thruster (10B) to allow the spacecraft (1) to go back into orbit from a celestial body.

6. The spacecraft (1) according to any one of claims 1 to 5, wherein the main structure (10) comprises docking means configured to couple the spacecraft (1) to a client craft (2).

7. The spacecraft (1) according to any one of claims 1 to 6, wherein the main structure (10) comprises landing means (16) configured to allow the spacecraft (1) to land on a celestial body.

8. The spacecraft (1) according to any one of claims 1 to 7, comprising fuel transfer means to ensure the refueling of the spacecraft (1).

9. A method for distributing electrical energy to at least one client craft (2) located at a point in the free space, in orbit or on a celestial body, using a spacecraft (1) according to any one of claims 1 to 8, comprising a step of transiting the spacecraft (1) previously placed in orbit, towards a client craft (2) located in the free space, in orbit or on a celestial body, by using the electric thruster (10A) and the solar electrical energy generator (10C) deployed after the spacecraft is placed into orbit.

10. The method according to claim 9, comprising steps of:
docking the spacecraft (1) to a client craft (2) located in the free space or in orbit; and
distributing the electrical energy produced by the solar electrical energy generator (10C) to the client craft (2).

11. The method according to any one of claims 9 and 10, comprising steps of:
placing the spacecraft (1) into orbit around a celestial body;
retracting the solar electrical energy generator (10C);
decoupling the first container (11) from the main structure (10);
coupling the main structure (10) to the second container (12);
decoupling the first container (11) from the second container (12);
landing the spacecraft (1) on the ground of the celestial body;
deploying the solar electrical energy generator (10C); and
distributing the electrical energy generated by the solar electrical energy generator (10C) to a client craft (2) on the celestial body.

12. The method according to any one of claims 9 to 11, wherein, in the case of a continuation of the mission of distributing electrical energy to another client craft, the method comprises steps of:
retracting the solar electrical energy generator (10C);
filling the second container (12), or alternatively coupling at least one third container (14) to the main structure (10) to supply fuel to the chemical thruster (10B); and
taking-off to bring the spacecraft (1) into orbit around the celestial body.

13. The method according to any one of claims 9 to 12, comprising steps of:
decoupling a third container (14) from the main structure (10);
a refueling step, in orbit or in the free space, for the electric thruster (10A) and the chemical thruster (10B); and
a step of transit of the spacecraft (1) to a client craft (2).
